(19) Europäisches Patentamt
European Patent Office
Office européen des brevets

(11) **EP 4 604 460 A1**

(12) **EUROPEAN PATENT APPLICATION**
published in accordance with Art. 153(4) EPC

(43) Date of publication:
**20.08.2025 Bulletin 2025/34**

(21) Application number: **23881744.9**

(22) Date of filing: **20.10.2023**

(51) International Patent Classification (IPC):
**H04L 25/02** $^{(2006.01)}$ **H04B 17/309** $^{(2015.01)}$

(52) Cooperative Patent Classification (CPC):
**H04B 17/309; H04L 25/02**

(86) International application number:
**PCT/CN2023/125611**

(87) International publication number:
**WO 2024/088166 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 CN 202211307947**

(71) Applicant: **Huawei Technologies Co., Ltd.
Shenzhen, Guangdong 518129 (CN)**

(72) Inventors:
• **LIAN, Jin
Shenzhen, Guangdong 518129 (CN)**
• **CAI, Shijie
Shenzhen, Guangdong 518129 (CN)**
• **LIU, Xianda
Shenzhen, Guangdong 518129 (CN)**
• **LIU, Kunpeng
Shenzhen, Guangdong 518129 (CN)**

(74) Representative: **Maiwald GmbH
Engineering
Elisenhof
Elisenstrasse 3
80335 München (DE)**

(54) **CHANNEL INFORMATION ACQUISITION METHOD AND APPARATUS**

(57)    Embodiments of this application provide a channel information obtaining method and an apparatus. The method includes: obtaining a frequency division duplex FDD downlink channel and a time division duplex TDD channel; determining a first channel expression (I) based on the FDD downlink channel and the TDD channel; performing inverse discrete Fourier transform IDFT on the first channel expression (I) to obtain a second channel expression (II); and sending first information based on the second channel expression (II). According to the foregoing method, channel estimation quality can be improved.

[FIG. 6]

Obtain a frequency division duplex FDD downlink channel and a time division duplex TDD channel — S610

Determine a first channel $H_{COM_{UE}}^{f}$ based on the FDD downlink channel and the TDD channel — S620

Perform inverse discrete Fourier transform IDFT on the first channel $H_{COM_{UE}}^{f}$ to obtain a second channel $H_{COM_{UE}}^{\tau}$ — S630

Send first information based on the second channel $H_{COM_{UE}}^{\tau}$ — S640

**Description**

This application claims priority to Chinese Patent Application No. 202211307947.8, filed with the China National Intellectual Property Administration on October 24, 2022 and entitled "CHANNEL INFORMATION OBTAINING METHOD AND APPARATUS", which is incorporated herein by reference in its entirety.

TECHNICAL FIELD

Embodiments of this application relate to the communication field, and more specifically, to a channel information obtaining method and an apparatus.

BACKGROUND

In a long term evolution (long term evolution, LTE) system and a new radio (new radio access technology, NR) system, a multiple-input and multiple-output (multiple-input and multiple-output, MIMO) technology is widely used. To better implement MIMO performance, a network device (for example, a base station) needs to obtain an accurate downlink channel, and calculate a precoding vector from the network device to a terminal device by using the channel.

For a time division duplex (time division duplex, TDD) system, because an uplink channel and a downlink channel are in a same frequency band, a radio channel has uplink-downlink reciprocity (that is, it may be considered that the uplink channel and the downlink channel are the same). The network device receives a signal sounding reference signal (sounding reference signal, SRS) sent by the terminal device, and performs channel estimation to obtain channel state information (channel state information, CSI) of the uplink channel. Further, based on the uplink-downlink reciprocity, it is equivalent to obtaining downlink CSI.

For a frequency division duplex (frequency division duplex, FDD) system, because an uplink channel and a downlink channel are in different frequency bands, the network device cannot directly obtain the downlink channel based on reciprocity. In a conventional technical solution, the network device sends a channel state information reference signal (channel state information reference signal, CSI-RS) to the terminal device in an FDD downlink frequency band. The terminal device estimates an FDD downlink frequency band channel based on the CSI-RS, and then the terminal device sends, to the network device based on a codebook (which may be understood as decomposition of channel space) pre-designed in a standard/protocol, an index of a codeword closest to the downlink frequency band channel or an amplitude weighting coefficient/a phase weighting coefficient of the codeword in a form of precoding matrix indicator (precoding matrix indicator, PMI). The network device obtains a downlink channel through approximate estimation with reference to the PMI sent by the terminal device.

Therefore, how to improve channel estimation quality becomes an urgent problem to be resolved.

SUMMARY

Embodiments of this application provide a channel information obtaining method, to improve channel estimation quality of a network device.

According to a first aspect, a channel information obtaining method is provided. The method includes: obtaining a frequency division duplex FDD downlink channel and a time division duplex TDD channel; determining a first channel $H_{COM_{UE}}^{f}$ based on the FDD downlink channel and the TDD channel; performing inverse discrete Fourier transform IDFT on the first channel $H_{COM_{UE}}^{f}$ to obtain a second channel $H_{COM_{UE}}^{\tau}$; and sending first information based on the second channel $H_{COM_{UE}}^{\tau}$.

It should be understood that the first channel $H_{COM_{UE}}^{f}$ may alternatively obtain the second channel $H_{COM_{UE}}^{\tau}$ in another transformation manner similar to inverse discrete Fourier transform. The transformation manner is applicable to the method provided in this application.

According to the method provided in this application, a terminal device determines the first channel based on the obtained FDD downlink channel and the obtained TDD channel, further performs IDFT transform on the first channel to obtain the second channel, determines the first information based on the second channel, and sends the first information to the network device, to further assist the network device in improving channel estimation precision within a large bandwidth and obtain channel state feedback information with higher precision.

With reference to the first aspect, in some possible implementations, the sending first information based on the

second channel $H^\tau_{COM_{UE}}$ includes: obtaining first energy of the second channel $H^\tau_{COM_{UE}}$ based on the second channel $H^\tau_{COM_{UE}}$, where the first energy is a sum of energy of all coefficients in the second channel $H^\tau_{COM_{UE}}$; determining second energy based on the first energy, where the second energy is a sum of energy of coefficients in a set A; and determining the first information based on the second energy, where the first information includes position information and phase information of the set A on the second channel $H^\tau_{COM_{UE}}$.

All the coefficients in the second channel $H^\tau_{COM_{UE}}$ may be: each element in a vector of the second channel $H^\tau_{COM_{UE}}$, where the element may be a real number or a complex number; or each element in a matrix of the second channel $H^\tau_{COM_{UE}}$, where the element may be a real number or a complex number. The energy may be an absolute value, an amplitude, a modulus, or a square of a modulus of the coefficient.

For example, when first transformation is IDFT, the first energy is a sum of energy of a delay path on the second channel $H^\tau_{COM_{UE}}$. The second energy is determined based on the first energy, where the second energy is within a range of the first energy, the second energy is the sum of the energy of the coefficients in the set A, and the set A is within a range of the delay path. The first information is determined based on the second energy, where the first information includes the position information and the phase information of the set A on the second channel $H^\tau_{COM_{UE}}$.

With reference to the first aspect, in some possible implementations, a first reference signal is received, where the first reference signal is from a network device. The FDD downlink channel and the TDD channel are obtained based on the first reference signal.

With reference to the first aspect, in some possible implementations, a first operation is performed on the FDD downlink channel and the TDD channel based on first indication information to obtain the first channel $H^f_{COM_{UE}}$, where the first indication information includes a start point $f_{start}$ and an end point $f_{end}$ of a bandwidth of the first channel $H^f_{COM_{UE}}$.

With reference to the first aspect, in some possible implementations, the first operation includes one or more of the following: concatenation, zero-padding, and extension.

According to a second aspect, a channel information obtaining method is provided. The method includes: obtaining a frequency division duplex FDD uplink channel and a time division duplex TDD channel; determining a third channel $H^f_{COM_{BS}}$ based on the FDD uplink channel and the TDD channel; and determining an FDD downlink channel based on the third channel $H^f_{COM_{BS}}$ and first information, where the first information is related to a first channel $H^f_{COM_{UE}}$, and the first channel $H^f_{COM_{UE}}$ is determined based on the FDD downlink channel and the TDD channel.

According to the method provided in this application, a network device determines the third channel based on the obtained FDD uplink channel and the obtained TDD channel, and determines the FDD downlink channel based on the third channel and the first information. The network device determines the FDD downlink channel based on the third channel and the first information that is related to a delay path corresponding to the first channel and that is determined by a terminal device, so that channel estimation precision of the network device within a large bandwidth can be improved, and channel state feedback information with higher precision can be obtained.

With reference to the second aspect, in some possible implementations, a fourth channel $H^\tau_{COM_{BS}}$ is determined based on the third channel $H^f_{COM_{BS}}$ and position information; and the FDD downlink channel is determined based on the fourth channel $H^\tau_{COM_{BS}}$ and phase information, where the first information includes the position information and the phase information.

With reference to the second aspect, in some possible implementations, phase correction is performed on the fourth channel $H^\tau_{COM_{BS}}$ based on the phase information to determine a fifth channel $H^\tau_{all}$; discrete Fourier transform

DFT is performed on the fifth channel $H_{all}^{\tau}$ to determine a full frequency-domain channel $H_{all}^{f}$; and the FDD downlink channel is determined based on the full frequency-domain channel $H_{all}^{f}$, the FDD uplink channel, and the TDD channel.

With reference to the second aspect, in some possible implementations, a second reference signal is received, where the second reference signal is from a terminal device; and the FDD uplink channel and the TDD channel are obtained based on the second reference signal.

With reference to the second aspect, in some possible implementations, a first operation is performed on the FDD uplink channel and the TDD channel to obtain the third channel $H_{COM_{BS}}^{f}$, where a start point of a bandwidth of the third channel $H_{COM_{BS}}^{f}$ is $f_{start}$, and an end point of the bandwidth of the third channel $H_{COM_{BS}}^{f}$ is $f_{end}$.

With reference to the second aspect, in some possible implementations, first indication information is sent, where the first indication information indicates to perform the first operation on the FDD downlink channel and the TDD channel to obtain the first channel $H_{COM_{UE}}^{f}$, and the first indication information includes a start point $f_{start}$ and an end point $f_{end}$ of a bandwidth of the first channel $H_{COM_{UE}}^{f}$.

With reference to the second aspect, in some possible implementations, the first operation includes one or more of the following: concatenation, zero-padding, and extension.

According to a third aspect, a channel information obtaining method is provided. The method includes: determining a first wideband based on at least two time division duplex TDD frequency bands, where the first wideband includes the at least two TDD frequency bands and a bandwidth between the at least two TDD frequency bands; determining N pilot blocks based on the first wideband, where N is a positive integer; performing numbering for the first wideband based on P, to obtain a first pilot block, where P is a smallest prime number greater than or equal to N; and sending a sounding reference signal SRS on the first pilot block.

According to the method provided in this application, in a TDD system, a virtual large bandwidth, that is, the first wideband, is determined based on the at least two TDD frequency bands and the bandwidth between the TDD frequency bands by using a design of joint cross-frequency band with sparsity. Channel estimation precision can be improved at the same overheads or system overheads can be reduced by using a sparse design at the same channel estimation precision.

With reference to the third aspect, in some possible implementations, performing numbering for the first wideband based on P, to obtain the first pilot block includes: determining an index set $C_r$ based on P, where the index set $C_r$ is an intersection of a set $\{c_{r,n} = log_{\alpha}(d_{r,n} - 1): d_{r,n} \in C_r^{s,P-1}, d_{r,n} \neq 1\}$ and a set $\{I_{min}^{b}, ..., I_{max}^{b}\}$; and determining the first pilot block based on the index set $C_r$, where $C_r^{S,P-1} = \{d_{r,n} = \alpha^r \alpha^{Sn} \bmod P: n = 0, 1, ..., K-1\}$, $K = \lfloor (P-1)/S \rfloor$, $\alpha$ is a primitive root of P, and S is a quantity of first pilot blocks that are initially selected from P pilot blocks and that are for sending the SRS, that is, S is less than P. $I_{min}^{b}$ is a minimum index of a pilot block corresponding to a $b^{th}$ TDD frequency band, $I_{max}^{b}$ is a maximum index of a pilot block corresponding to the $b^{th}$ TDD frequency band, and b is a positive integer.

With reference to the third aspect, in some possible implementations, one first pilot block includes one or more resource elements REs.

According to a fourth aspect, a channel information obtaining apparatus is provided. The apparatus includes: a transceiver unit, configured to obtain a frequency division duplex FDD downlink channel and a time division duplex TDD channel; and a processing unit, configured to determine a first channel $H_{COM_{UE}}^{f}$ based on the FDD downlink channel and the TDD channel, where the processing unit is further configured to perform inverse discrete Fourier transform IDFT on the first channel $H_{COM_{UE}}^{f}$ to obtain a second channel $H_{COM_{UE}}^{\tau}$; and the processing unit is further configured to send first information based on the second channel $H_{COM_{UE}}^{\tau}$.

With reference to the fourth aspect, in some possible implementations, the processing unit is further configured to obtain first energy of the second channel $H^{\tau}_{COM_{UE}}$ based on the second channel $H^{\tau}_{COM_{UE}}$, where the first energy is a sum of energy of all coefficients in the second channel $H^{\tau}_{COM_{UE}}$; the processing unit is further configured to determine second energy based on the first energy, where the second energy is a sum of energy of coefficients in a set A; and the processing unit is further configured to determine the first information based on the second energy, where the first information includes position information and phase information of the set A on the second channel $H^{\tau}_{COM_{UE}}$.

With reference to the fourth aspect, in some possible implementations, the transceiver unit is further configured to: receive a first reference signal, where the first reference signal is from a network device; and obtain the FDD downlink channel and the TDD channel based on the first reference signal.

With reference to the fourth aspect, in some possible implementations, the processing unit is further configured to perform a first operation on the FDD downlink channel and the TDD channel based on first indication information to obtain the first channel $H^{f}_{COM_{UE}}$, where the first indication information includes a start point $f_{start}$ and an end point $f_{end}$ of a bandwidth of the first channel $H^{f}_{COM_{UE}}$.

With reference to the fourth aspect, in some possible implementations, the first operation includes one or more of the following: concatenation, zero-padding, and extension.

According to a fifth aspect, a channel information obtaining apparatus is provided. The apparatus includes: a transceiver unit, configured to obtain a frequency division duplex FDD uplink channel and a time division duplex TDD channel; and a processing unit, configured to determine a third channel $H^{f}_{COM_{BS}}$ based on the FDD uplink channel and the TDD channel, where the processing unit is further configured to determine an FDD downlink channel based on the third channel $H^{f}_{COM_{BS}}$ and first information; and the first information is related to a first channel $H^{f}_{COM_{UE}}$, and the first channel $H^{f}_{COM_{UE}}$ is determined based on the FDD downlink channel and the TDD channel.

With reference to the fifth aspect, in some possible implementations, the processing unit is further configured to determine a fourth channel $H^{\tau}_{COM_{BS}}$ based on the third channel $H^{f}_{COM_{BS}}$ and position information; and the processing unit is further configured to determine the FDD downlink channel based on the fourth channel $H^{\tau}_{COM_{BS}}$ and phase information, where the first information includes the position information and the phase information.

With reference to the fifth aspect, in some possible implementations, the processing unit is further configured to perform phase correction on the fourth channel $H^{\tau}_{COM_{BS}}$ based on the phase information to determine a fifth channel $H^{\tau}_{all}$; the processing unit is further configured to perform discrete Fourier transform DFT on the fifth channel $H^{\tau}_{all}$ to determine a full frequency-domain channel $H^{f}_{all}$; and the processing unit is further configured to determine the FDD downlink channel based on the full frequency-domain channel $H^{f}_{all}$, the FDD uplink channel, and the TDD channel.

With reference to the fifth aspect, in some possible implementations, the transceiver unit is further configured to: receive a second reference signal, where the second reference signal is from a terminal device; and obtain the FDD uplink channel and the TDD channel based on the second reference signal.

With reference to the fifth aspect, in some possible implementations, the processing unit is further configured to perform a first operation on the FDD uplink channel and the TDD channel to obtain the third channel $H^{f}_{COM_{BS}}$, where a start point of a bandwidth of the third channel $H^{f}_{COM_{BS}}$ is $f_{start}$, and an end point of the bandwidth of the third channel $H^{f}_{COM_{BS}}$ is $f_{end}$.

With reference to the fifth aspect, in some possible implementations, the transceiver unit is further configured to send first indication information, where the first indication information indicates to perform the first operation on the FDD downlink channel and the TDD channel to obtain the first channel $H_{COM_{UE}}^{f}$, and the first indication information includes a start point $f_{start}$ and an end point $f_{end}$ of a bandwidth of the first channel $H_{COM_{UE}}^{f}$.

With reference to the fifth aspect, in some possible implementations, the first operation includes one or more of the following: concatenation, zero-padding, and extension.

According to a sixth aspect, a channel information obtaining apparatus is provided. The apparatus includes: a processing unit, configured to determine a first wideband based on at least two time division duplex TDD frequency bands, where the first wideband includes the at least two TDD frequency bands and a bandwidth between the at least two TDD frequency bands. The processing unit is further configured to determine N pilot blocks based on the first wideband, where N is a positive integer. The processing unit is further configured to: perform numbering for the first wideband based on P, to obtain a first pilot block, where P is a smallest prime number greater than or equal to N; and send a sounding reference signal SRS on the first pilot block.

With reference to the sixth aspect, in some possible implementations, that the processing unit is further configured to perform numbering for the first wideband based on P, to obtain the first pilot block includes: determining an index set $C_r$ based on P, where the index set $C_r$ is an intersection of a set $\{c_{r,n} = log_\alpha(d_{r,n} - 1) : d_{r,n} \in C_r^{S,P-1}, d_{r,n} \neq 1\}$ and a set $\{I_{min}^{b}, ..., I_{max}^{b}\}$; and determining the first pilot block based on the index set $C_r$, where $C_r^{S,P-1} = \{d_{r,n} = \alpha^r \alpha^{Sn} \bmod P : n = 0, 1, ..., K - 1\}$, $K = \lfloor (P - 1)/S \rfloor$, $\alpha$ is a primitive root of P, and S is a quantity of first pilot blocks that are initially selected from P pilot blocks and that are for sending the SRS, that is, S is less than P. $I_{min}^{b}$ is a minimum index of a pilot block corresponding to a b$^{th}$ TDD frequency band, $I_{max}^{b}$ is a maximum index of a pilot block corresponding to the b$^{th}$ TDD frequency band, and b is a positive integer.

With reference to the sixth aspect, in some possible implementations, one first pilot block includes one or more resource elements REs.

According to a seventh aspect, a channel information obtaining apparatus is provided. The apparatus is configured to execute units or modules such as a processing unit and/or a communication unit in the method according to any one of the first aspect to the third aspect, and the possible implementations of the first aspect to the third aspect.

In an implementation, the apparatus is a network element. When the apparatus is the network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network element. When the apparatus is the chip, the chip system, or the circuit used in the network element, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus includes at least one processor, configured to execute a computer program or instructions stored in a memory, to perform the method according to any one of the possible implementations of the first aspect to the third aspect. Optionally, the apparatus further includes the memory, configured to store the computer program or the instructions. Optionally, the apparatus further includes a communication interface. The processor reads, through the communication interface, the computer program or the instructions stored in the memory.

In an implementation, the apparatus is a network element.

In another implementation, the apparatus is a chip, a chip system, or a circuit used in a network element.

According to a ninth aspect, this application provides a processor, configured to perform the method provided in the foregoing aspects.

Unless otherwise specified, or provided that operations do not contradict actual functions or internal logic of the operations in related descriptions, operations such as sending and obtaining/receiving related to the processor may be understood as operations such as output and receiving or input of the processor, or operations such as sending and receiving performed by a radio frequency circuit and an antenna. This is not limited in this application.

According to a tenth aspect, a computer-readable storage medium is provided. The computer-readable medium stores program code to be executed by a device, and the program code is used to perform the method according to any one of the possible implementations of the first aspect to the third aspect.

According to an eleventh aspect, a computer program product including instructions is provided. When the computer program product runs on a computer, the computer is enabled to perform the method according to any one of the possible implementations of the first aspect to the third aspect.

According to a twelfth aspect, a communication system is provided, including one or more of the foregoing terminal device and the foregoing network device.

BRIEF DESCRIPTION OF DRAWINGS

FIG. 1 is a diagram of a communication system to which an embodiment of this application is applicable;
FIG. 2 is a diagram of a frequency band according to an embodiment of this application;
FIG. 3 is a schematic flowchart of a channel information obtaining method according to an embodiment of this application;
FIG. 4 is a diagram of TDD frequency band combination according to an embodiment of this application;
FIG. 5 is a diagram of information exchange according to an embodiment of this application;
FIG. 6 is a schematic flowchart of another channel information obtaining method according to an embodiment of this application;
FIG. 7 is a diagram of obtaining frequency band channel information according to an embodiment of this application;
FIG. 8 is a diagram of frequency band combination according to an embodiment of this application;
FIG. 9 is a schematic flowchart of another channel information obtaining method according to an embodiment of this application;
FIG. 10 is a diagram of frequency band combination according to an embodiment of this application;
FIG. 11 is a diagram of other information exchange according to an embodiment of this application;
FIG. 12 is a diagram of a structure of a channel information obtaining apparatus according to an embodiment of this application; and
FIG. 13 is a diagram of a structure of another channel information obtaining apparatus according to an embodiment of this application.

DESCRIPTION OF EMBODIMENTS

The following describes technical solutions in embodiments of this application with reference to accompanying drawings.

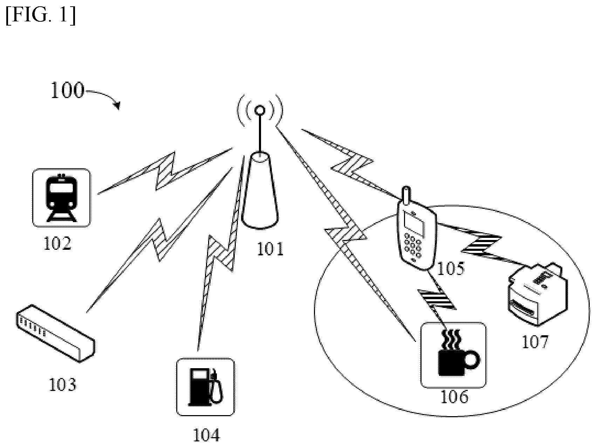

FIG. 1 is a diagram of a communication system to which an embodiment of this application is applicable. As shown in FIG. 1, a communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device located in the coverage.

Optionally, the terminal devices may directly communicate with each other. For example, the terminal devices may directly communicate with each other by using a device-to-device (device-to-device, D2D) technology. As shown in FIG. 1, the terminal devices 105 and 106, and the terminal devices 105 and 107 may directly communicate with each other by using the D2D technology. The terminal device 106 and the terminal device 107 may separately or simultaneously communicate with the terminal device 105.

The terminal devices 105 to 107 may also communicate with the network device 101 separately, for example, may directly communicate with the network device 101, for example, the terminal devices 105 and 106 in FIG. 1 may directly communicate with the network device 101, or may communicate with the network device 101 indirectly, for example, the terminal device 107 in FIG. 1 communicates with the network device 101 through the terminal device 106.

It should be understood that FIG. 1 is merely a diagram. The communication system may further include another network device, for example, may further include a core network device, a wireless relay device, and a wireless backhaul device, which are not shown in FIG. 1. In addition, quantities of network devices and terminal devices included in the communication system are not limited in embodiments of this application.

The terminal device is connected to the network device in a wireless manner, to access the mobile communication system.

The network device in embodiments of this application may be a base station (base transceiver station, BTS) in a global system for mobile communications (global system of mobile communications, GSM) or code division multiple access (code division multiple access, CDMA) system, a NodeB (NodeB, NB) in a wideband code division multiple access (wideband code division multiple access, WCDMA) system, an evolved NodeB (evolutional NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, or a network device in a future evolved PLMN network. This is not limited in embodiments of this application. Alternatively, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). A specific technology and a specific device form that are used by the network device are not limited in embodiments of this application.

It should be understood that, in embodiments of this application, the network device may be an apparatus configured to implement a function of the network device, or may be an apparatus, for example, a chip system, that can support the network device in implementing the function. The apparatus may be mounted in the network device.

It should be further understood that, a specific structure of an execution body of a method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

The terminal device may also be referred to as terminal, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application. A specific technology and a specific device form that are used by the terminal device are not limited in embodiments of this application.

It should be understood that, in embodiments of this application, the terminal device may be an apparatus configured to implement a function of the terminal device, or may be an apparatus, for example, a chip system, that can support the terminal device in implementing the function. The apparatus may be mounted in a terminal. In embodiments of this application, the chip system may include a chip, or may include a chip and another discrete component.

The network device and the terminal device may be deployed on land, including indoor or outdoor and handheld or vehicle-mounted, may be deployed on water, or may be deployed on an airplane, a balloon, or an artificial satellite in the air. Application scenarios of the network device and the terminal device are not limited in embodiments of this application.

The network device and the terminal device may communicate with each other by using a licensed spectrum, may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

In embodiments of this application, a time domain symbol may be an orthogonal frequency division multiplexing (orthogonal frequency division multiplexing, OFDM) symbol or a discrete Fourier transform-spread-OFDM (Discrete Fourier Transform-spread-OFDM, DFT-s-OFDM) symbol. Unless otherwise specified, symbols in embodiments of this application are time domain symbols.

In this embodiment of this application, an SRS is used as an example. The SRS may also be replaced with a channel state information reference signal (Channel State Information Reference Resource, CSI-RS), a demodulation reference signal (Demodulation Reference Resource, DMRS), a time domain/frequency domain/phase tracking reference signal, or the like. The CSI-RS may be a known signal used to obtain channel information to perform CSI measurement and reporting. The DMRS may be a known signal used to perform channel estimation when a shared channel or a control channel is received.

Without loss of generality, the following describes in detail a channel state obtaining method provided in embodiments of this application by using information exchange between the network device and the terminal device as an example.

For ease of understanding of embodiments of this application, several basic concepts in embodiments of this application are briefly described. The basic concepts described below are briefly described by using a basic concept specified in a new radio NR communication system protocol as an example. However, this does not mean that embodiments of this application can be applied only to an NR system. Therefore, standard names that appear when the NR system is used as an example for description are all functional descriptions. A specific name is not limited, only indicates a function of a device, and may be correspondingly extended to another system, for example, a 2nd generation (2nd generation, 2G) communication system, a 3rd generation (3rd generation, 3G) communication system, a 4th generation (4th generation, 4G) communication system, a 5th generation (5th generation, 5G) communication system, or a future communication system.

1. Precoding technology

When a channel state is known, a network device may process a to-be-sent signal by using a precoding matrix that matches the channel state, so that a precoded to-be-sent signal adapts to a channel. In this way, a receiving device can suppress impact between signals of a plurality of receiving devices, and maximize a signal to interference plus noise ratio of a received signal. Therefore, quality (for example, the signal to interference plus noise ratio (signal to interference plus noise ratio, SINR)) of the received signal is improved through precoding processing on the to-be-sent signal.

It should be understood that related descriptions of the precoding technology in this application are merely examples for ease of understanding, and are not intended to limit the protection scope of embodiments of this application. In a specific implementation process, a sending device may further perform precoding in another manner. For example, when channel information (for example, but not limited to a channel matrix) cannot be obtained, precoding is performed by using a preset precoding matrix or in a weighting processing manner. For brevity, specific content of the manner is not described in this application.

2. Channel reciprocity

In a time division duplex (time division duplex, TDD) mode, on uplink and downlink channels, signals are transmitted on a same frequency domain resource and different time domain resources. Within a short period of time (for example, coherence time of channel propagation), it may be considered that channels through which the signals on the uplink and downlink channels pass are the same, and the uplink and downlink channels may be equivalently obtained from each other. This is reciprocity between the uplink and downlink channels. Based on the reciprocity between the uplink and downlink channels, a network device may measure the uplink channel based on an uplink reference signal, for example, a sounding reference signal (sounding reference signal, SRS), and may estimate the downlink channel based on the uplink channel, so that a precoding matrix used for downlink transmission can be determined.

However, in a frequency division duplex (frequency division duplex, FDD) mode, because a frequency band spacing between the uplink and downlink channels is far greater than a coherence bandwidth, the uplink and downlink channels do not have complete reciprocity, and consequently, the precoding matrix that is used for downlink transmission and that is determined by using the uplink channel may not adapt to the downlink channel. In an FDD system, the network device may perform downlink precoding based on channel state information (channel state information, CSI) fed back by a terminal device to the network device.

3. Reference signal (Reference signal, RS)

The RS may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) used for downlink channel measurement, or may be a sounding reference signal (sounding reference signal, SRS) used for uplink channel measurement. It should be understood that the foregoing listed reference signals are merely examples, and should not constitute any limitation on this application. This application does not exclude a possibility of defining another reference signal in a future protocol to implement a same or similar function.

The SRS is a sounding reference signal sent by a terminal device. In an NR system, a network device may obtain uplink channel information by using the SRS. For a TDD system, downlink channel information may be obtained by measuring the SRS and by using channel reciprocity, and then precoding is performed based on the channel information, to transmit data to a user.

4. Precoding matrix indicator (Precoding matrix indicator, PMI)

The precoding matrix indicator may indicate a precoding matrix. For example, the precoding matrix may be a precoding matrix determined by a terminal device based on a channel matrix of each frequency-domain unit. Alternatively, the matrix may be a precoding matrix that is in a predefined codebook and that is closest to the precoding matrix determined based on the channel matrix. The precoding matrix may be determined by the terminal device through channel estimation or the like or based on channel reciprocity. However, it should be understood that a specific method of determining the precoding matrix by the terminal device is not limited to the foregoing description. For specific implementations, refer to the conventional technology. For brevity, implementations are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application. For the manner of determining the precoding matrix, refer to the conventional technology. For brevity, manners are not enumerated herein.

The PMI is an indication signal sent by the terminal device. In an NR system, the terminal device sends the PMI to a network device, so that the network device finds, in a predefined codebook, a codeword that is closest to a downlink channel and that is observed by the terminal device, and further obtains part of information about the downlink channel, and performs precoding based on the channel information, to transmit data to a user.

In a TDD system, because an uplink channel and a downlink channel are in a same frequency band, uplink and downlink channels of a radio channel have reciprocity (that is, it may be considered that the uplink channel and the downlink channel are the same). The network device receives the SRS signal sent by the terminal device, and performs channel estimation to obtain CSI of the uplink channel. Further, based on the uplink-downlink reciprocity, it is equivalent to obtaining CSI of the downlink channel. The network device calculates precoding (Pre-coding) based on the information, to improve signal transmission quality or rate. In other words, accuracy of SRS channel estimation may affect an overall throughput rate of the system, and a sending period of the SRS severely affects performance. Because time-frequency resources allocated to the SRS are fixed, more time domain resources need to be occupied to shorten the period of the SRS, that is, to increase a sampling frequency of channel estimation. Therefore, a design in which frequency domain resources are reduced to obtain time domain resources is proposed. To be specific, on a premise of same SRS time-frequency resources, the sending period of the SRS in time domain is shortened (for example, a 1/4 period, which is equivalent to four times original time domain resources) by using a sparse SRS design in frequency domain (the "sparse" means that only 1/4 of the frequency domain resources are occupied), to improve channel estimation quality.

In an FDD system, because an uplink channel and a downlink channel are in different frequency bands, the network device cannot directly obtain the downlink channel based on reciprocity. A conventional technical solution is as follows: The network device sends a CSI-RS to the terminal device in an FDD downlink frequency band. The terminal device estimates an FDD downlink frequency band channel based on the CSI-RS, and then sends, to the network device based on a codebook (which may be understood as decomposition of channel space) pre-designed in a standard/protocol, an index of a codeword closest to the downlink frequency band channel or an amplitude weighting coefficient/a phase weighting coefficient of the codeword in a form of PMI. The network device obtains a downlink channel through approximate estimation with reference to the PMI sent by the terminal device, and further calculates a precoding vector by using the downlink channel.

Based on the foregoing descriptions of the methods for estimating the downlink channel based on the reciprocity between the uplink and downlink channels or the PMI in the TDD system and the FDD system, it can be learned that, in the TDD downlink channel estimation method, as a bandwidth of a frequency band decreases, a sparse SRS performance loss increases compared with a performance loss of a conventional SRS. In a case in which, for example, the bandwidth of the TDD frequency band (for example, an A frequency band or an F frequency band defined by an operator) is merely 20 MHz to 30 MHz in the future, the sparse SRS performance loss of channel estimation further increases. In the FDD downlink channel estimation method, PMI is used for feedback, so that the network device obtains the FDD downlink frequency band channel. When feedback overheads are limited, loss of precision of the channel obtained by the network device occurs. Consequently, downlink precoding is inaccurate, and throughput performance of the system is affected.

Based on the foregoing problems in the conventional technology, embodiments of this application provide a channel information obtaining method, to improve channel estimation quality of the TDD system and the FDD system by using correlation between a plurality of frequency bands in a case of multi-band convergence of the system.

It should be noted that, in this embodiment of this application, for ease of understanding, in the TDD system, the technical solutions in this application are described in detail by using the A frequency band or the F frequency band whose bandwidths of the frequency bands are merely 20 MHz to 30 MHz as examples. Certainly, this application is implemented.

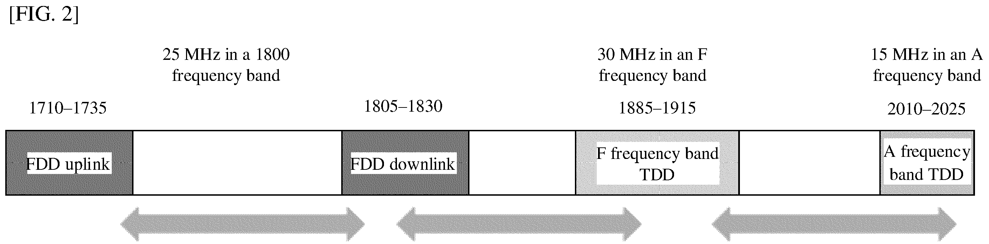

FIG. 2 is a diagram of a frequency band. It should be understood that the frequency band shown in FIG. 2 is merely an example, and the technical solutions in embodiments of this application are further applicable to another frequency band. This is not limited in this application.

Embodiments of this application may be applied to, for example, a frequency band to which the technical solution in this embodiment is applied, and there is any limitation. As shown in FIG. 2, the A frequency band in the TDD system is a frequency band of 15 MHz between 2010 Hz and 2025 Hz, and the F frequency band in the TDD system is a frequency band of 30 MHz between 1885 Hz and 1915 Hz. In the FDD system, the FDD uplink channel is located in a frequency band of 25 MHz between 1710 Hz and 1735 Hz in a 1800 frequency band, and the FDD downlink channel is located in a frequency band of 25 MHz between 1805 Hz and 1830 Hz in the 1800 frequency band.

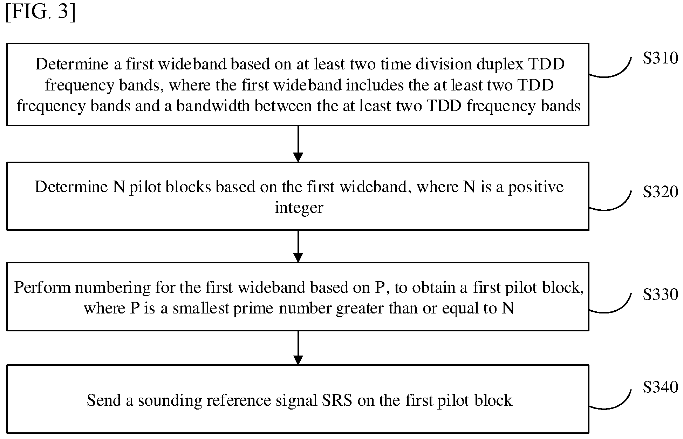

To resolve the foregoing technical problem in which the performance loss of channel estimation further increases due to a small bandwidth in the TDD system, this application provides a channel information obtaining method, as shown in FIG. 3. With reference to FIG. 3, the following describes in detail a schematic flowchart of a channel information obtaining method according to an embodiment of this application. The method shown in FIG. 3 includes the following steps: S310: Determine a first wideband based on at least two time division duplex TDD frequency bands.

The first wideband includes the at least two TDD frequency bands and a bandwidth between the at least two TDD frequency bands.

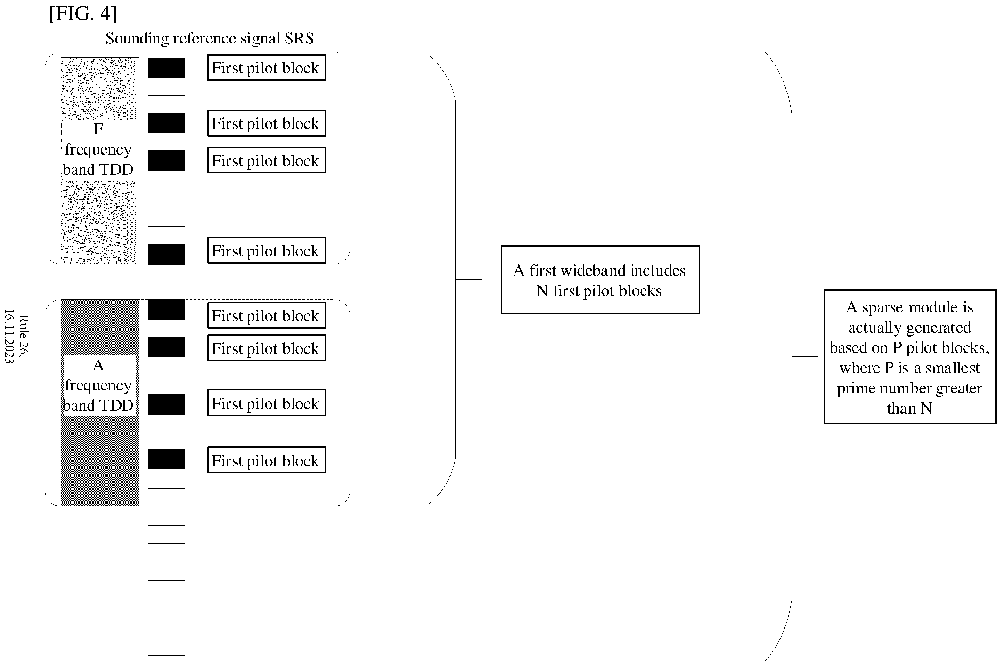

In a possible implementation, the first wideband is determined based on the at least two TDD frequency bands. For example, FIG. 4 is a diagram of TDD frequency band combination. In a TDD system, one F frequency band and one A frequency band in TDD frequency bands are combined, to determine the first wideband. As shown in FIG. 4, the first wideband includes one F frequency band, one A frequency band, and a bandwidth between the F frequency band and the A frequency band.

FIG. 4 is merely an example, and constitutes no limitation on the technical solutions in embodiments of this application. Certainly, the first wideband may alternatively include a plurality of TDD frequency bands, for example, three, four, or more TDD frequency bands. This is not limited in this application. For ease of understanding, in this application, the A frequency band and the F frequency band in the TDD frequency bands are used as an example for description. The method in this embodiment of this application may be further applied to another TDD frequency band defined in the future. This is not limited in this application.

In another possible implementation, the first wideband is determined based on the at least two TDD frequency bands. For example, in the TDD system, two F frequency bands and one A frequency band in the TDD frequency bands are combined, or two A frequency bands and one F frequency band are combined, to determine the first wideband. The first wideband includes all frequency bands forming the first wideband and all bandwidths between all the frequency bands.

S320: Determine N pilot blocks based on the first wideband.

Specifically, the first wideband is divided into the N pilot blocks. As shown in FIG. 4, in a range of the first wideband, black rectangular boxes and blank rectangular boxes form the N pilot blocks. A value of N is a total quantity of the black rectangular boxes and the blank rectangular boxes, and N is a positive integer.

In an implementation, combs used for all of the P pilot blocks are the same (that is, $K_{TC}$ is the same and $\overline{k}_{TC}$ is the same).

S330: Perform numbering for the first wideband based on P, to obtain a first pilot block.

Specifically, P is determined based on N. When N is a prime number, P is equal to N. When N is a non-prime number, P is a smallest prime number greater than N. Therefore, P is a smallest prime number greater than or equal to N. Numbering is performed for the first wideband based on a value of P, to obtain the first pilot block.

In an example, when N is equal to 97, and N is a prime number, P is equal to N, and therefore, P is equal to 97. When N is equal to 100, and N is a non-prime number, a smallest prime number greater than 100 is 101, and therefore, P is equal to 101.

The first pilot block may be unevenly distributed on the first wideband. One first pilot block includes one or more resource elements (resource elements, REs). The RE is a minimum resource unit in LTE physical resources, occupies one OFDM symbol (symbol) (for example, 1/14 ms) in time domain, and occupies one subcarrier (for example, 15 kHz) in frequency domain.

In an implementation, performing numbering for the first wideband based on P, to obtain the first pilot block may perform the following specific operations:

First, a set $\left\{ c_{r,n} = log_{\alpha}\left(d_{r,n} - 1\right) : d_{r,n} \in C_r^{s,P-1}, d_{r,n} \neq 1 \right\}$ is determined based on P, where a number in the set $\left\{ c_{r,n} = log_{\alpha}\left(d_{r,n} - 1\right) : d_{r,n} \in C_r^{s,P-1}, d_{r,n} \neq 1 \right\}$ corresponds to a specific position of a pilot block in the first wideband.

Then, an intersection of the set $\left\{ c_{r,n} = log_{\alpha}\left(d_{r,n} - 1\right) : d_{r,n} \in C_r^{s,P-1}, d_{r,n} \neq 1 \right\}$ obtained based on P and a set $\left\{ l_{min}^b, ..., l_{max}^b \right\}$ is taken, to obtain an index set $C_r$. Therefore, the index set $C_r$ = the intersection of $\left\{ c_{r,n} = log_{\alpha}\left(d_{r,n} - 1\right) : d_{r,n} \in C_r^{s,P-1}, d_{r,n} \neq 1 \right\}$ and the set $\left\{ l_{min}^b, ..., l_{max}^b \right\}$, where a corresponding number in the index set $C_r$ is a pilot block in which a bandwidth part between the at least two TDD frequency bands forming the first wideband is filtered.

Finally, the number in the index set $C_r$ corresponds to a specific position of the first pilot block among the pilot blocks in the first wideband, and the first pilot block is located in the TDD frequency band. For example, the black rectangular boxes in the first wideband shown in FIG. 4 are first pilot blocks, and the first pilot blocks are in the A frequency band/F frequency band in FIG. 4.

In the foregoing specific numbering process, b is a positive integer,

$$C_r^{S,P-1} = \{d_{r,n} = \alpha^r \alpha^{Sn} \ mod \ p : n = 0,1,...,K-1\}, \ \mathrm{K} = \lfloor(P-1)/S\rfloor$$ , $\alpha$ is a primitive root of P,

$I_{min}^b$ is a minimum index of a pilot block in a $b^{th}$ TDD frequency band, and $I_{max}^b$ is a maximum index of a pilot block in the $b^{th}$ TDD frequency band. S is a quantity of first pilot blocks that are initially selected from the P pilot blocks and that are for sending an SRS, that is, S is less than P. In an actual process, an index of the first pilot block is obtained by taking the intersection of the set $\{c_{r,n} = log_\alpha(d_{r,n}-1) : d_{r,n} \in C_r^{S,P-1}, d_{r,n} \neq 1\}$ and the set $\{I_{min}^b,...,I_{max}^b\}$. It can be learned that a quantity of first pilot blocks for actually sending the SRS is less than S.

A specific value of S may be notified by a network device to a terminal device by using a system message or other indication information, may be sent by the terminal device to the network device by using specific indication information, or may be pre-agreed by the terminal device and the network device in a protocol. This is not limited in this application.

It may be understood that, when elements in the index set

$$\mathrm{C}_r = \{c_{r,n} = log_\alpha(d_{r,n}-1) : d_{r,n} \in C_r^{S,P-1}, d_{r,n} \neq 1\}$$ are arranged in ascending order from 1 to N, for example, $C_r$ = {1,3,8, ..., N - 6, N}, the element in $C_r$ may indicate a specific position of the first pilot block in the first wideband.

In an example, the index of the first pilot block is an intersection of the index set

$$\mathrm{C}_r = \{c_{r,n} = log_\alpha(d_{r,n}-1) : d_{r,n} \in C_r^{S,P-1}, d_{r,n} \neq 1\}$$ and a set $\{I_{min}^2,...,I_{max}^2\}$. For example, the index set $C_r$ = {1,4,6,11,12,13,14,16,19,22,24}, and the set

$$\{I_{min}^2,...,I_{max}^2\} = \{14,15,16,17,18,19,20,21,22,23,24\}$$ . In this case, an intersection of the index set $C_r$ and the set $\{I_{min}^2,...,I_{max}^2\}$ is {14,16,19,22,24}, and the set {14,16,19,22,24} is a set of indexes of the first pilot blocks. Pilot blocks corresponding to indexes {12,13} are pilot blocks of a bandwidth part between TDD frequency bands.

Based on the set $\{I_{min}^2,...,I_{max}^2\} = \{14,15,16,17,18,19,20,21,22,23,24\}$ , it can be learned that 14 in the set is a minimum index of a pilot block in the $b^{th}$ TDD frequency band, and 24 in the set is a maximum index of a pilot block in the $b^{th}$ TDD frequency band.

It may be understood that, when the elements in the index set $C_r$ are arranged in ascending order from 0 to N-1, the index set $\mathrm{C}_r = \{c_{r,n-1} = log_\alpha(d_{r,n-1}-1) : d_{r,n-1} \in C_r^{S,P-1}, d_{r,n} \neq 1\}$. For example, $C_r$ = {0,2,7, ..., N - 7, N - 1}, where the element in $C_r$ indicates a specific position of the first pilot block in the first wideband.

The index set Cr may include a number greater than N-1. Cr is a set generated by using P as a primitive root. Finally, the index of the first pilot block is obtained by taking an intersection of the index set $C_r$ and the set $\{I_{min}^2,...,I_{max}^2\}$ , and an index value range of the intersection is [0:N-1].

In an example, the index of the first pilot block is the intersection of the index set

$$\mathrm{C}_r = \{c_{r,n-1} = log_\alpha(d_{r,n-1}-1) : d_{r,n-1} \in C_r^{S,P-1}, d_{r,n} \neq 1\}$$ and the set $\{I_{min}^2,...,I_{max}^2\}$ . For example, the index set $C_r$ = {0,3,5,10,11,12,13,15,18,21,23}, and the set

$$\{I_{min}^2,...,I_{max}^2\} = \{13,14,15,16,17,18,19,20,21,22,23\}$$ . In this case, the intersection of the index set $C_r$

and the set $\{I_{min}^2,...,I_{max}^2\}$ is {13,15,18,21,23}. Based on the set

$\{I_{min}^2,...,I_{max}^2\} = \{13,14,15,16,17,18,19,20,21,22,23\}$ , it can be learned that the number 13 in the set is a minimum index of a pilot block in the $b^{th}$ TDD frequency band, and 23 in the set is a maximum index of a pilot block in the $b^{th}$ TDD frequency band.

It can be learned from the foregoing examples that specific numbers of the pilot blocks may be increased from 1 to N. It should be understood that the specific numbers of the pilot blocks may alternatively be increased from 0 to N-1 and numbered in ascending order, or may be numbered in descending order. The foregoing examples are merely examples, and there may be another numbering manner. This is not limited in this application.

For example, as shown in FIG. 4, the F frequency band in the TDD frequency bands in FIG. 4 is considered as a first frequency band with b = 1, and the A frequency band is considered as a second frequency band with b = 2. For example, when b = 2, the first pilot block is selected from the second frequency band, and the index of the first pilot block is an intersection of the index set $C_r = \{c_{r,n} = log_\alpha(d_{r,n} - 1): d_{r,n} \in C_r^{S,P-1}, d_{r,n} \neq 1\}$ and the set

$\{I_{min}^2, \dots, I_{max}^2\}$ .    $C_r^{S,P-1} = \{d_{r,n} = \alpha^r \alpha^{Sn} \bmod P: n = 0, 1, \dots, K - 1\}$ ,    where

$K = \lfloor (P - 1)/S \rfloor$, $I_{min}^2$ is a minimum index of a pilot block in the second TDD frequency band, and $I_{max}^2$ is a maximum index of a pilot block in the second TDD frequency band.

S340: Send the SRS on the first pilot block.

Specifically, numbering is performed for the first wideband based on P, the specific position of the first pilot block is determined, and the SRS reference signal is sent on the first pilot block.

It should be understood that, in the process of the foregoing step S330, numbering is performed for the first wideband based on P, to obtain the first pilot block.

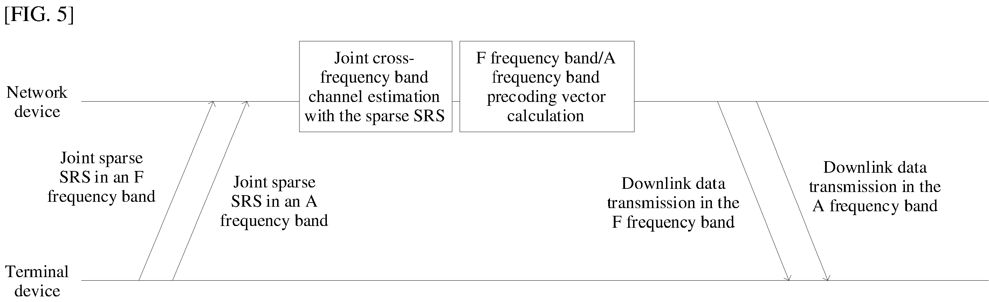

Based on the method shown in FIG. 3, FIG. 5 is a diagram of information exchange according to an embodiment of this application. The terminal device determines, according to step S310 to step S340 in FIG. 3, to send the SRS reference signal to the network device on the first pilot block. The network device receives the SRS reference signal sent by the terminal device. The network device may estimate an SRS channel according to an existing method, and further obtain a precoding vector.

The method shown in FIG. 3 to FIG. 5 is specific to a method for obtaining a downlink channel in the TDD system. A module design of combining at least two different TDD frequency bands across frequency bands with a sparse SRS enables joint construction of a virtual large bandwidth across the frequency bands, to improve channel estimation precision under same overheads or reduce overheads by using a sparse design under same channel estimation precision. Therefore, a problem of a sparse SRS performance loss due to a small bandwidth in the conventional technology is resolved.

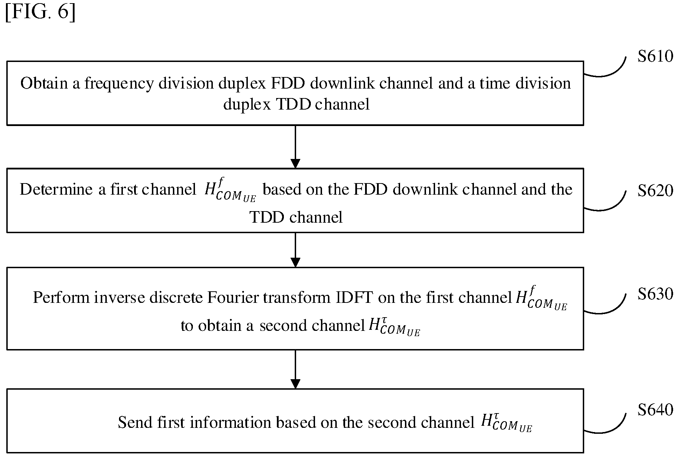

With reference to FIG. 6 to FIG. 11, the following describes in detail a process of obtaining a downlink channel in an FDD system in embodiments of this application.

FIG. 6 is a schematic flowchart of another channel information obtaining method. In the method shown in FIG. 6, the method includes the following steps:

S610: Obtain an FDD downlink channel and a TDD channel.

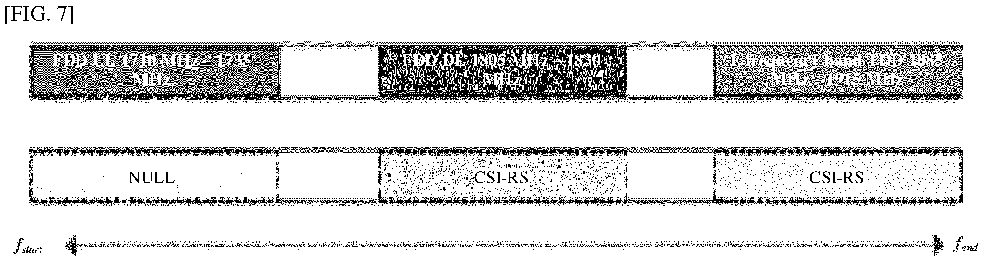

In an example, a terminal device obtains an FDD downlink channel $H_{DL}^f$ and a TDD channel $H_{TDD}^f$. For example, FIG. 7 is a diagram of obtaining frequency band channel information. On a terminal device side, the terminal device obtains the FDD downlink channel $H_{DL}^f$ in 1805 MHz to 1830 MHz and the TDD channel $H_{TDD}^f$ in a frequency band of 1885 MHz to 1915 MHz by using a CSI-RS reference signal separately.

In an implementation, the terminal device obtains the FDD downlink channel $H_{DL}^f$ and the TDD channel $H_{TDD}^f$ based on the CSI-RS reference signal, where the CSI-RS reference signal is from a network device. Alternatively, the terminal device obtains the FDD downlink channel $H_{DL}^f$ and the TDD channel $H_{TDD}^f$ by using another reference signal or message. This is not limited in this application.

It should be understood that, in the example of FIG. 7, that the terminal device obtains one FDD downlink channel and one TDD channel is described. However, in this application, the terminal device can obtain one or more FDD downlink channels and TDD channels. FIG. 7 is merely an example, and constitutes no limitation on this application.

S620: Determine a first channel $H_{COM_{UE}}^f$ based on the FDD downlink channel and the TDD channel.

Specifically, the terminal device obtains the FDD downlink channel and the TDD channel, and determines the first channel $H_{COM_{UE}}^f$ based on the obtained FDD downlink channel and the obtained TDD channel.

In a possible implementation, the terminal device performs a first operation on the obtained FDD downlink channel and the obtained TDD channel, to determine the first channel $H_{COM_{UE}}^f$. The terminal device may determine, based on predefined configuration-related information or a predefined protocol, to perform the first operation on the obtained FDD downlink channel $H_{DL}^f$ and the obtained TDD channel $H_{TDD}^f$, to determine the first channel $H_{COM_{UE}}^f$.

The first operation includes one or more of the following: concatenation, zero-padding, and extension.

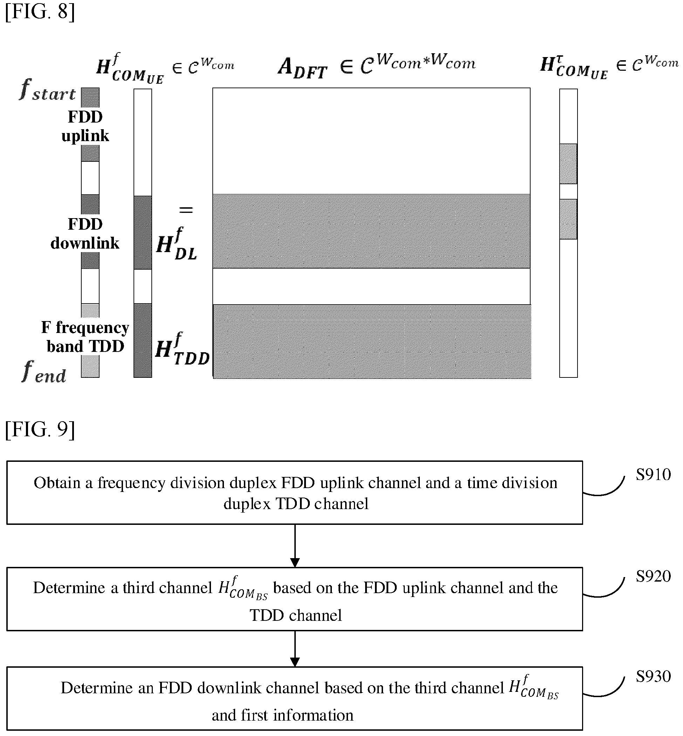

In another possible implementation, the terminal device performs a first operation on the obtained FDD downlink channel and the obtained TDD channel based on first indication information, to determine the first channel $H_{COM_{UE}}^{f}$. The first indication information is received by the terminal device from the network device. The first indication information indicates the terminal device to perform the first operation on the obtained FDD downlink channel and the obtained TDD channel, to determine the first channel $H_{COM_{UE}}^{f}$. The first indication information includes a start point and an end point of a bandwidth of the first channel $H_{COM_{UE}}^{f}$, for example, a start point $f_{start}$ and an end point $f_{end}$ of the first channel $H_{COM_{UE}}^{f}$ shown in FIG. 8.

The start point $f_{start}$ and the end point $f_{end}$ included in the first indication information may be used for direct indication by using a specific frequency (Hz), a predefined resource block (resource block, RB), an RE number, or a predefined frequency band number.

It should be understood that the terminal device performs the first operation on the obtained FDD downlink channel and the obtained TDD channel, to determine the first channel $H_{COM_{UE}}^{f}$. For example, as shown in FIG. 8, the terminal device obtains the FDD downlink channel $H_{DL}^{f}$ and the TDD channel $H_{TDD}^{f}$, and obtains a virtual wideband frequency-domain channel $H_{COM_{UE}}^{f}$ (that is, the first channel) after the first operation is performed on the obtained FDD downlink channel $H_{DL}^{f}$ and the obtained TDD channel $H_{TDD}^{f}$. A bandwidth of the first channel $H_{COM_{UE}}^{f}$ is $W_{com}$, and the bandwidth is a granularity of a frequency domain bandwidth. Inverse discrete Fourier transform (inverse discrete Fourier transform, IDFT) is performed on the first channel

$$H_{COM_{UE}}^{f} \in \mathcal{C}^{W_{com}}$$

to obtain a second channel $H_{COM_{UE}}^{\tau}$. The second channel is a delay-domain channel.

S630: Perform inverse discrete Fourier transform on the first channel $H_{COM_{UE}}^{f}$ to obtain the second channel $H_{COM_{UE}}^{\tau}$.

Specifically, the terminal device performs the first operation on the obtained FDD downlink channel and the obtained TDD channel, to determine the first channel $H_{COM_{UE}}^{f}$, and performs inverse discrete Fourier transform IDFT on the first channel $H_{COM_{UE}}^{f}$ to obtain the second channel $H_{COM_{UE}}^{\tau}$.

In an example, the terminal device performs inverse discrete Fourier transform IDFT on the first channel $H_{COM_{UE}}^{f}$ to obtain the second channel $H_{COM_{UE}}^{\tau}$. For example, IDFT transform is performed, that is, $H_{COM_{UE}}^{\tau} = A_{IDFT} * H_{COM_{UE}}^{f}$. $A_{IDFT}$ is an IDFT base matrix of $W_{com} * W_{com}$.

S640: Send first information based on the second channel $H_{COM_{UE}}^{\tau}$.

Specifically, the terminal device obtains the second channel $H_{COM_{UE}}^{\tau}$ based on the first channel $H_{COM_{UE}}^{f}$, and sends the first information based on the second channel $H_{COM_{UE}}^{\tau}$.

In a possible implementation, the terminal device obtains first energy of the second channel based on the second

channel $H^{\tau}_{COM_{UE}}$ . The first energy is a sum of energy of all coefficients in the second channel $H^{\tau}_{COM_{UE}}$ . The terminal device determines and obtains second energy based on the first energy. The second energy is a sum of energy of coefficients in a set A. The terminal device determines the first information based on the second energy, and sends the first information. The first information includes position information and phase information of the set A on the second channel $H^{\tau}_{COM_{UE}}$ .

It should be understood that all the coefficients in the second channel $H^{\tau}_{COM_{UE}}$ include:

In another possible implementation, the terminal device obtains first energy of the second channel based on the second channel $H^{\tau}_{COM_{UE}}$ . The first energy is a sum of energy of a delay path on the second channel $H^{\tau}_{COM_{UE}}$ . The terminal device determines and obtains second energy based on the first energy. The second energy is a sum of energy in a set A, and the set A is within a range of the delay path on the second channel $H^{\tau}_{COM_{UE}}$ . The terminal device determines the first information based on the second energy, and sends the first information. The first information includes position information and phase information of the set A on the second channel $H^{\tau}_{COM_{UE}}$ .

The first information includes position information and phase information of the set A on the second channel $H^{\tau}_{COM_{UE}}$ . For example, the phase information and the position information may be represented by a bitmap (bitmap), or may be represented by a Molar value. For example, the position information may be represented by using a bitmap such as [0,1,1,0]. [0,1,1,0] indicates that at a position 2 and a position 3, there are delay paths that need to be fed. The phase information may be that after a phase of a second channel value in position information at a corresponding position is normalized to a range [-pi,pi], uniform quantization is performed with X bits for feedback.

In an example, the terminal device obtains, based on the second channel $H^{\tau}_{COM_{UE}}$ , the first energy by calculating a sum of energy of all paths in delay domain. The terminal device determines, based on the first indication information from the network device or based on a protocol agreement between the terminal device and the network device, the set A of paths including x% of total energy (that is, the second energy) in the entire delay domain (generally, 95% of energy in a delay-domain channel may be concentrated on some paths, and for a small amount of energy, some delay paths may be sacrificed to ensure overheads), and sends, by using a precoding matrix indication signal PMI, the first information, to be specific, position information {$I_{strong}$} and corresponding phase information {$\Phi_{strong}$} of the set A on $H^{\tau}_{COM_{UE}}$ , where $H^{\tau}_{COM_{UE}} \in \mathcal{C}^{W_{com}}$ .

The first information includes the position information {$I_{strong}$} and the phase information {$\Phi_{strong}$}.

In the method shown in FIG. 6, for the FDD system, the terminal device obtains the FDD downlink channel and the TDD channel; performs the first operation based on the foregoing channels to obtain the first channel, where the first channel is transformed to obtain the second channel; determines the position information and the phase information of the set A of the paths in the second channel on the second channel based on the second channel; and sends the first information including the position information and the phase information to the network device. The network device further determines the FDD downlink channel based on the first information.

It should be noted that the method shown in FIG. 6 is also applicable to a case in which the terminal device obtains one or more FDD downlink channels and TDD channels, and performs the first operation based on the one or more FDD downlink channels and TDD channels to obtain the first channel. FIG. 8 is merely an example, and does not limit the technical solutions in this application.

With reference to a method shown in FIG. 9, the following describes in detail a process in which a network device determines, after receiving first information from a terminal device, an FDD downlink channel based on the first information.

S910: Obtain an FDD uplink channel and a TDD channel.

In a first implementation, the network device obtains the FDD uplink channel and the TDD channel based on an SRS reference signal sent by the terminal device. Alternatively, the network device may obtain the FDD uplink channel and the TDD channel by using another reference signal or message. A specific manner of obtaining the FDD uplink channel and the TDD channel is not limited in this application.

It should be understood that, in this application, the network device can obtain one or more FDD uplink channels and TDD channels. This is not limited in this application.

S920: Determine a third channel $H^{f}_{COM_{BS}}$ based on the FDD uplink channel and the TDD channel.

Specifically, after obtaining the FDD uplink channel and the TDD channel, the network device determines the third channel $H_{COM_{BS}}^{f}$ based on the FDD uplink channel and the TDD channel.

In a possible implementation, the network device performs a first operation on the obtained FDD uplink channel and the obtained TDD channel, to determine the third channel $H_{COM_{BS}}^{f}$. The first operation includes one or more of the following: concatenation, zero-padding, and extension.

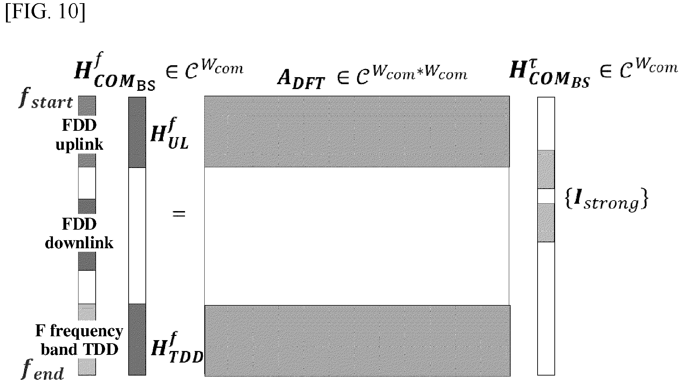

In an example, as shown in FIG. 10, after the first operation is performed on an FDD uplink channel $H_{DL}^{f}$ and a TDD channel $H_{TDD}^{f}$, a virtual wideband frequency-domain channel $H_{COM_{BS}}^{f}$ whose bandwidth is $W_{com} = f_{end} - f_{start}$ is obtained. $H_{COM_{BS}}^{f} = [H_{UL}^{f}; 0; H_{TDD}^{f}] \in C^{W_{com}}$, and the virtual wideband frequency-domain channel may be referred to as the third channel $H_{COM_{BS}}^{f}$.

S930: Determine an FDD downlink channel based on the third channel $H_{COM_{BS}}^{f}$ and the first information.

Specifically, the network device determines the third channel $H_{COM_{BS}}^{f}$ based on the FDD uplink channel and the TDD channel, and the network device determines the FDD downlink channel based on the third channel and the first information.

The first information is related to a first channel $H_{COM_{UE}}^{f}$, and the first channel $H_{COM_{UE}}^{f}$ is determined based on the FDD downlink channel and the TDD channel. It should be understood that the first information is sent by the terminal device to the network device. For a detailed description of the first information, refer to step S640 shown in FIG. 6. Details are not described herein again.

In a possible implementation, the network device determines the FDD downlink channel based on the third channel $H_{COM_{BS}}^{f}$ and the first information. The network device first determines a fourth channel $H_{COM_{BS}}^{\tau}$ based on the third channel $H_{COM_{BS}}^{f}$ and position information in the first information, and the network device determines the FDD downlink channel based on the fourth channel $H_{COM_{BS}}^{\tau}$ and phase information in the first information.

In an example, as shown in FIG. 10, the network device may use a compressed sensing method (or another method) to obtain, through solving, a corresponding delay-domain channel $H_{COM_{BS}}^{\tau}$ by using position information of a "strong path" in the first information fed back by the terminal device. In the compressed sensing method, the position information is to notify a position of an unknown number in a to-be-solved vector.

$$H_{COM_{BS}}^{\tau} \in C^{W_{com}},$$

and the delay-domain channel $H_{COM_{BS}}^{\tau}$ may also be referred to as the fourth channel. For example, when determining a support set by using an orthogonal matching pursuit (orthogonal matching pursuit, OMP) algorithm, the network device directly provides a final support set based on the first information, and then performs inverse transform.

It should be understood that, the position information of the "strong path" is to indicate, in the first information fed back by the terminal device to the network device, a specific position where there is a delay path. The network device further determines the fourth channel based on the position information of the "strong path".

In another possible implementation, the network device obtains the FDD downlink channel based on a fourth channel $H_{COM_{BS}}^{\tau}$ and phase information. The network device performs phase correction on the fourth channel $H_{COM_{BS}}^{\tau}$ based on the phase information to determine a fifth channel $H_{all}^{\tau}$, and the network device performs discrete Fourier transform DFT on the fifth channel $H_{all}^{\tau}$ to determine a full frequency-domain channel $H_{all}^{f}$. The network device determines the FDD downlink channel based on the full frequency-domain channel $H_{all}^{f}$, the FDD uplink channel, and the TDD channel.

In an example, as shown in FIG. 10, the network device performs phase correction on the fourth channel $H_{COM_{BS}}^{\tau}$ based on the phase information in the first information fed back by the terminal device. For example, a coefficient that is of a delay path and that is originally estimated by the network device is $ke^{j\phi}$, but it is fed that a phase of the delay path should be $\theta$. In this case, the coefficient of the delay path needs to be rotated, that is, multiplied by a coefficient $e^{j(\theta-\phi)}$, so that an actual coefficient of the delay path changes to $ke^{j\phi} * e^{j(\theta-\phi)} = ke^{j\theta}$. Therefore, phase correction is completed. The full frequency-domain channel $H_{all}^{f}$ of a combined frequency band is obtained through IDFT, and then the corresponding FDD downlink channel at the middle in FIG. 10 is obtained. Estimation inaccuracy caused by zero-padding may be further eliminated through iteration.

According to the method shown in FIG. 9, in an FDD system, the network device obtains the FDD uplink channel and the TDD channel by using the SRS reference signal. Similar to the terminal device, the network device performs the first operation on the FDD uplink channel and the TDD channel, to obtain a virtual wideband frequency-domain channel (referred to as the third channel). The network device further performs compressed sensing on the third channel based on the position information in the first information sent by the terminal device, to obtain the fourth channel. Phase correction is performed on the fourth channel, and the full frequency-domain channel $H_{all}^{f}$ of the full combined frequency band is obtained through IDFT, so that the network device can obtain the corresponding FDD downlink channel and complete estimation of the FDD downlink channel by the network device, and therefore, channel estimation precision of the network device is improved.

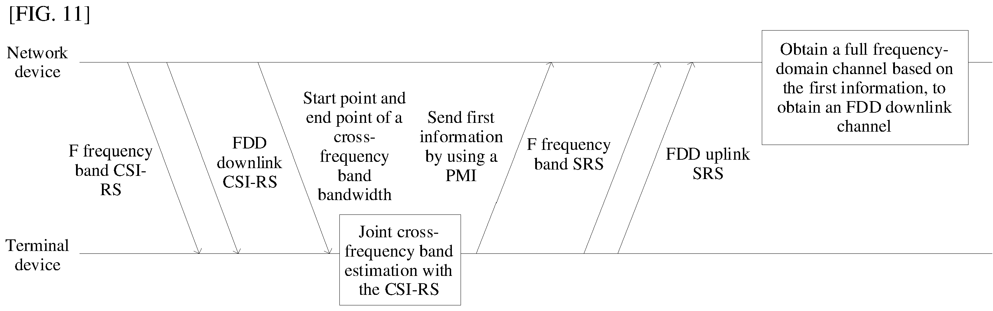

FIG. 11 is a diagram of a procedure of information exchange according to an embodiment of this application. FIG. 11 mainly describes a specific procedure of information exchange between the terminal device and the network device in FIG. 6 to FIG. 9.

FIG. 11 is a flowchart of information exchange between the network device and the terminal device. The terminal device determines a start point and an end point of a bandwidth of a frequency band across frequency bands, enables a joint virtual wideband when estimating a delay-domain channel, and feeds back related information of a delay path corresponding to the joint virtual wideband to the network device, to assist the network device in improving channel estimation precision within a large bandwidth, and further obtain CSI information of higher precision fed back by a target frequency band compared with that fed back by an existing codebook.

As shown in FIG. 11, the terminal device obtains a TDD channel and an FDD downlink channel by using a CSI-RS reference signal, and the terminal device performs joint cross-frequency band estimation by using the CSI-RS, and sends first information to the network device by using a PMI. In addition, the network device obtains the TDD channel and an FDD uplink channel by using an SRS reference signal, and the network device obtains a full frequency-domain channel through assistance of the first information received by using the PMI, to obtain the FDD downlink channel through estimation.

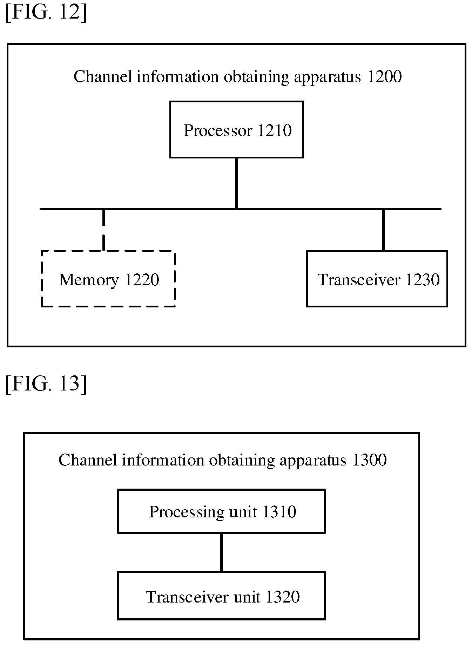

The foregoing describes in detail the channel information obtaining method provided in embodiments of this application with reference to FIG. 2 to FIG. 11. The following describes in detail a channel information obtaining apparatus provided in embodiments of this application with reference to FIG. 12 and FIG. 13.

The following describes in detail a channel information obtaining apparatus provided in embodiments of this application with reference to FIG. 12 and FIG. 13. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, a transmit end device or a receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that module division in embodiments of this application is an example, and is merely logical function division. During actual implementation, there may be another division manner. An example in which each functional module is obtained through division based on each corresponding function is used below for description.

FIG. 12 is a block diagram of an example of an information transmission device 1200 according to this application. Any device such as the terminal device and the network device in any method in FIG. 5 to FIG. 8 may be implemented by a communication device shown in FIG. 12.

It should be understood that the information transmission device 1200 may be a physical device, a component (for example, an integrated circuit or a chip) of the physical device, or a functional module in the physical device.

As shown in FIG. 12, the communication device 1200 includes one or more processors 1213. Optionally, the processor 1213 may invoke an interface to implement a receiving function and a sending function. The interface may be a logical interface or a physical interface. This is not limited. For example, the interface may be a transceiver circuit, an input/output interface, or an interface circuit. The transceiver circuit, the input/output interface, or the interface circuit configured to implement the receiving function and the sending function may be separated, or may be integrated together. The transceiver circuit or the interface circuit may be configured to read and write code/data, or the transceiver circuit or the interface circuit may be configured to transmit or transfer a signal.

Optionally, the interface may be implemented through a transceiver. Optionally, the information transmission device 1200 may further include a transceiver 1230. The transceiver 1230 may also be referred to as a transceiver unit, a transceiver machine, a transceiver circuit, or the like, and is configured to implement a transceiver function.

Optionally, the communication device 1200 may further include a memory 1220. A specific deployment position of the memory 1220 is not specifically limited in embodiments of this application. The memory may be integrated into the processor, or may be independent of the processor. When the device 1200 does not include the memory, the device 1200 only needs to have a processing function, and the memory may be deployed at another position (for example, a cloud system).

The processor 1210, the memory 1220, and the transceiver 1230 communicate with each other through an internal connection path, to transfer a control signal and/or a data signal.

It may be understood that, although not shown, the device 1200 may further include another apparatus, for example, an input apparatus, an output apparatus, or a battery.

Optionally, in some embodiments, the memory 1220 may store execution instructions used to perform the method in embodiments of this application. The processor 1210 may execute the instructions stored in the memory 1220 and complete, in combination with other hardware (for example, the transceiver 1230), the steps performed in the following methods. For a specific working process and beneficial effect, refer to the descriptions in the foregoing method embodiments.

The methods disclosed in embodiments of this application may be applied to the processor 1210, or may be implemented by the processor 1210. The processor 1210 may be an integrated circuit chip and has a signal processing capability. In an implementation process, the steps of the method may be performed through a hardware integrated logic circuit in the processor or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 1220 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

FIG. 13 is a block diagram of a communication apparatus 1300 according to this application. The apparatus 1300 includes a transceiver unit 1320. The transceiver unit 1320 may be configured to implement a corresponding communication function. The transceiver unit 1320 may also be referred to as a communication interface or a communication unit.

Optionally, the apparatus 1300 may further include a processing unit 1310. The processing unit 1310 may be configured to process data.

Optionally, a specific form of the information transmission apparatus 1300 may be a general-purpose computer device or a chip in the general-purpose computer device. This is not limited in embodiments of this application. As shown in FIG. 10, the apparatus includes a processing unit 1310 and a transceiver unit 1320.

Specifically, the apparatus 1300 may be any device in this application, and may implement a function that can be implemented by the device. It should be understood that the apparatus 1300 may be a physical device, a component (for example, an integrated circuit or a chip) of the physical device, or a functional module in the physical device.

In a possible design, the apparatus 1300 may be the terminal device (for example, the terminal device) in the foregoing method embodiments, or may be a chip configured to implement a function of the terminal device (for example, the terminal device) in the foregoing method embodiments.

Optionally, the apparatus 1300 further includes a storage unit. The storage unit may be configured to store instructions and/or data. The processing unit 1310 may read the instructions and/or the data in the storage unit, so that the apparatus implements actions of different terminal devices in the foregoing method embodiments, for example, actions of the control network element or the terminal device.

The apparatus 1300 may be configured to perform the actions performed by the control network element or the terminal device in the foregoing method embodiments. In this case, the apparatus 1300 may be the control network element or the terminal device, or a component of the control network element or the terminal device. The transceiver unit 1320 is configured to perform sending and receiving related operations of the control network element or the terminal device in the foregoing method embodiments. The processing unit 1310 is configured to perform processing-related operations of the control network element or the terminal device in the foregoing method embodiments.

It should be understood that the apparatus 1300 may be configured to perform the actions performed by the control network element or the network device in the foregoing method embodiments. In this case, the transceiver unit 1320 in the apparatus 1300 may be implemented through a communication interface (for example, a transceiver or an input/output interface), which may correspond, for example, to the communication interface 1230 shown in FIG. 12. The processing unit 1310 in the apparatus 1300 may be implemented by using at least one processor, which may correspond, for example, to the processor 1210 shown in FIG. 12.

Optionally, the communication apparatus 1300 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein again.

It should be understood that a specific process in which the units perform the foregoing corresponding steps is described in detail in the foregoing method embodiments. For brevity, details are not described herein again.

In addition, in this application, the communication apparatus 1300 is presented in a form of functional module. The "module" herein may be an application-specific integrated circuit ASIC, a circuit, a processor and a memory that execute one or more software or firmware programs, an integrated logic circuit, and/or another component that can provide the foregoing functions. In a simple embodiment, a person skilled in the art may figure out that the apparatus 1300 may be in a form shown in FIG. 13. The processing unit 1310 may be implemented by using the processor 1210 shown in FIG. 12. Optionally, if the computer device shown in FIG. 12 includes the memory 1200, the processing unit 1010 may be implemented by using the processor 1210 and the memory 1200. The transceiver unit 1320 may be implemented by using the transceiver 1230 shown in FIG. 12. The transceiver 1230 includes a receiving function and a sending function. Specifically, the processor is implemented by executing a computer program stored in the memory. Optionally, when the apparatus 1300 is a chip, a function and/or an implementation process of the transceiver unit 1320 may alternatively be implemented through a pin, a circuit, or the like. Optionally, the memory may be a storage unit in the chip, for example, a register or a cache. Alternatively, the storage unit may be a storage unit that is in the apparatus and that is located outside the chip, for example, the memory 1220 shown in FIG. 12, or may be a storage unit that is deployed in another system or device and is not in the computer device.

Aspects or features of this application may be implemented as a method, an apparatus, or a product that uses standard programming and/or engineering technologies. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, include, and/or carry instructions and/or data.

According to the method provided in embodiments of this application, this application further provides a computer program product. The computer program product includes a computer program or a group of instructions. When the computer program or the group of instructions are run on a computer, the computer is enabled to perform the method in any one of embodiments shown in FIG. 2 to FIG. 11.

According to the method provided in embodiments of this application, this application further provides a computer-readable storage medium. The computer-readable medium stores a program or a group of instructions. When the program or the group of instructions are run on a computer, the computer is enabled to perform the method in any one of embodiments shown in FIG. 2 to FIG. 11.

According to the method provided in embodiments of this application, this application further provides a communication system. The communication system includes the foregoing apparatus or device.

The terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

It should be further understood that the term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be further understood that numbers such as "first" and "second" are introduced in embodiments of this application merely to distinguish between different objects, for example, distinguish between different "information", "devices", or "units". An understanding of a specific object and a correspondence between different objects should be determined based on functions and internal logic of the specific object, and should not constitute any limitation on the implementation process of embodiments of this application.

The protocol in this application may be a communication protocol or a specification, for example, a 3GPP communication protocol.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the foregoing apparatus embodiments are merely examples. For example, division of the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the current technology, or some of the technical solutions may be implemented in a form of software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel information obtaining method, comprising:

   obtaining a frequency division duplex FDD downlink channel and a time division duplex TDD channel;

   determining a first channel $H^f_{COM_{UE}}$ based on the FDD downlink channel and the TDD channel;

   performing inverse discrete Fourier transform IDFT on the first channel $H^f_{COM_{UE}}$ to obtain a second channel $H^\tau_{COM_{UE}}$; and

   sending first information based on the second channel $H^\tau_{COM_{UE}}$.

2. The method according to claim 1, wherein the sending the first information based on the second channel $H^\tau_{COM_{UE}}$ comprises:

   obtaining first energy of the second channel $H^\tau_{COM_{UE}}$ based on the second channel $H^\tau_{COM_{UE}}$, wherein the first energy is a sum of energy of all coefficients in the second channel $H^\tau_{COM_{UE}}$;

   determining second energy based on the first energy, wherein the second energy is a sum of energy of coefficients in a set A; and

   determining the first information based on the second energy, wherein the first information comprises position information and phase information of the set A on the second channel $H^\tau_{COM_{UE}}$.

3. The method according to claim 1 or 2, wherein the obtaining the FDD downlink channel and the TDD channel comprises:

   receiving a first reference signal, wherein the first reference signal is from a network device; and

   obtaining the FDD downlink channel and the TDD channel based on the first reference signal.

4. The method according to any one of claims 1 to 3, wherein the determining a first channel $H^f_{COM_{UE}}$ based on the FDD downlink channel and the TDD channel comprises:

   performing a first operation on the FDD downlink channel and the TDD channel based on first indication information to obtain the first channel $H^f_{COM_{UE}}$, wherein the first indication information comprises a start point $f_{end}$ and an end point $f_{start}$ of a bandwidth of the first channel $H^f_{COM_{UE}}$.

5. The method according to claim 4, wherein the first operation comprises one or more of the following: concatenation, zero-padding, and extension.

6. A channel information obtaining method, comprising:

   obtaining a frequency division duplex FDD uplink channel and a time division duplex TDD channel;

determining a third channel $H_{COM_{BS}}^f$ based on the FDD uplink channel and the TDD channel; and

determining an FDD downlink channel based on the third channel $H_{COM_{BS}}^f$ and first information, wherein the first information is related to a first channel $H_{COM_{UE}}^f$, and the first channel $H_{COM_{UE}}^f$ is determined based on the FDD downlink channel and the TDD channel.

7.  The method according to claim 6, wherein the determining an FDD downlink channel based on the third channel $H_{COM_{BS}}^f$ and first information comprises:

determining a fourth channel $H_{COM_{BS}}^\tau$ based on the third channel $H_{COM_{BS}}^f$ and position information; and

determining the FDD downlink channel based on the fourth channel $H_{COM_{BS}}^\tau$ and phase information, wherein the first information comprises the position information and the phase information.

8.  The method according to claim 7, wherein the obtaining the FDD downlink channel based on the fourth channel $H_{COM_{BS}}^\tau$ and the phase information comprises:

performing the phase correction on the fourth channel $H_{COM_{BS}}^\tau$ based on the phase information to determine a fifth channel $H_{all}^\tau$;

performing discrete Fourier transform DFT on the fifth channel $H_{all}^\tau$ to determine a full frequency-domain channel $H_{all}^f$; and

determining the FDD downlink channel based on the full frequency-domain channel $H_{all}^f$, the FDD uplink channel, and the TDD channel.

9.  The method according to any one of claims 6 to 8, wherein the obtaining the FDD uplink channel and the TDD channel comprises:

receiving a second reference signal, wherein the second reference signal is from a terminal device; and obtaining the FDD uplink channel and the TDD channel based on the second reference signal.

10. The method according to any one of claims 6 to 9, wherein the obtaining the third channel $H_{COM_{BS}}^f$ based on the FDD uplink channel and the TDD channel comprises:

performing a first operation on the FDD uplink channel and the TDD channel to obtain the third channel $H_{COM_{BS}}^f$, wherein a start point of a bandwidth of the third channel $H_{COM_{BS}}^f$ is $f_{start}$, and an end point of the bandwidth of the third channel $H_{COM_{BS}}^f$ is $f_{end}$.

11. The method according to claim 10, wherein the method further comprises:
sending first indication information, wherein the first indication information indicates to perform the first operation on the FDD downlink channel and the TDD channel to obtain the first channel $H_{COM_{UE}}^f$, and the first indication information comprises a start point $f_{start}$ and an end point $f_{end}$ of a bandwidth of the first channel $H^f_{COM_{UE}}$.

12. The method according to claim 10 or 11, wherein the first operation comprises one or more of the following: concatenation, zero-padding, and extension.

13. A channel information obtaining apparatus, comprising:

a transceiver unit, configured to obtain a frequency division duplex FDD downlink channel and a time division duplex TDD channel; and

a processing unit, configured to determine a first channel $H^f_{COM_{UE}}$ based on the FDD downlink channel and the TDD channel, wherein

the processing unit is further configured to perform inverse discrete Fourier transform IDFT on the first channel $H^f_{COM_{UE}}$ to obtain a second channel $H^\tau_{COM_{UE}}$; and

the processing unit is further configured to send first information based on the second channel $H^\tau_{COM_{UE}}$.

14. The apparatus according to claim 13, wherein that the processing unit is further configured to send the first information based on the second channel $H^\tau_{COM_{UE}}$ comprises:

the processing unit is further configured to obtain first energy of the second channel $H^\tau_{COM_{UE}}$ based on the second channel $H^\tau_{COM_{UE}}$, wherein the first energy is a sum of energy of all coefficients in the second channel $H^\tau_{COM_{UE}}$; and

the processing unit is further configured to determine second energy based on the first energy, wherein the second energy is a sum of energy of coefficients in a set A; and the processing unit is further configured to determine the first information based on the second energy, wherein the first information comprises position information and phase information of the set A on the second channel $H^\tau_{COM_{UE}}$.

15. The apparatus according to claim 13 or 14, wherein that the transceiver unit, configured to obtain the FDD downlink channel and the TDD channel comprises:

the transceiver unit is further configured to receive a first reference signal, wherein the first reference signal is from a network device; and
the transceiver unit is further configured to obtain the FDD downlink channel and the TDD channel based on the first reference signal.

16. The apparatus according to claim 13 or 14, wherein that the processing unit, configured to determine a first channel $H^f_{COM_{UE}}$ based on the FDD downlink channel and the TDD channel comprises:
the processing unit is further configured to perform a first operation on the FDD downlink channel and the TDD channel based on first indication information to obtain the first channel $H^f_{COM_{UE}}$, wherein the first indication information comprises a start point $f_{start}$ and an end point $f_{end}$ of a bandwidth of the first channel $H^f_{COM_{UE}}$.

17. The apparatus according to claim 16, wherein the first operation comprises one or more of the following: concatenation, zero-padding, and extension.

18. A channel information obtaining apparatus, comprising:

a transceiver unit, configured to obtain a frequency division duplex FDD uplink channel and a time division duplex TDD channel; and

a processing unit, configured to determine a third channel $H_{COM_{BS}}^{f}$ based on the FDD uplink channel and the TDD channel, wherein

the processing unit is further configured to determine an FDD downlink channel based on the third channel $H_{COM_{BS}}^{f}$ and first information; and

the first information is related to a first channel $H_{COM_{UE}}^{f}$, and the first channel $H_{COM_{UE}}^{f}$ is determined based on the FDD downlink channel and the TDD channel.

19. The apparatus according to claim 18, wherein that the processing unit is further configured to determine an FDD downlink channel based on the third channel $H_{COM_{BS}}^{f}$ and first information comprises:

the processing unit is further configured to determine a fourth channel $H_{COM_{BS}}^{\tau}$ based on the third channel $H_{COM_{BS}}^{f}$ and position information; and

the processing unit is further configured to determine the FDD downlink channel based on the fourth channel $H_{COM_{BS}}^{\tau}$ and phase information, wherein

the first information comprises the position information and the phase information.

20. The apparatus according to claim 19, wherein that the processing unit is further configured to obtain the FDD downlink channel based on the fourth channel $H_{COM_{BS}}^{\tau}$ and the phase information comprises:

the processing unit is further configured to perform the phase correction on the fourth channel $H_{COM_{BS}}^{\tau}$ based on the phase information to determine a fifth channel $H_{all}^{\tau}$;

the processing unit is further configured to perform discrete Fourier transform DFT on the fifth channel $H_{all}^{\tau}$ to determine a full frequency-domain channel $H_{all}^{f}$; and

the processing unit is further configured to determine the FDD downlink channel based on the full frequency-domain channel $H_{all}^{f}$, the FDD uplink channel, and the TDD channel.

21. The apparatus according to any one of claims 18 to 20, wherein that the transceiver unit, configured to obtain the FDD uplink channel and the TDD channel comprises:

the transceiver unit is further configured to receive a second reference signal, wherein the second reference signal is from a terminal device; and
the transceiver unit is further configured to obtain the FDD uplink channel and the TDD channel based on the second reference signal.

22. The apparatus according to any one of claims 18 to 21, wherein that the processing unit, configured to obtain the third channel $H_{COM_{BS}}^{f}$ based on the FDD uplink channel and the TDD channel comprises:

the processing unit is further configured to perform a first operation on the FDD uplink channel and the TDD channel to obtain the third channel $H_{COM_{BS}}^{f}$, wherein a start point of a bandwidth of the third channel $H_{COM_{BS}}^{f}$ is $f_{start}$, and an

end point of the bandwidth of the third channel $H_{COM_{BS}}^f$ is $f_{end}$.

23. The apparatus according to claim 22, wherein

the transceiver unit is further configured to send first indication information, wherein the first indication information indicates to perform the first operation on the FDD downlink channel and the TDD channel to obtain the first channel $H_{COM_{UE}}^f$, and the first indication information comprises a start point $f_{start}$ and an end point $f_{end}$ of a bandwidth of the first channel $H_{COM_{UE}}^f$.

24. The method according to claim 22 or 23, wherein the first operation comprises one or more of the following: concatenation, zero-padding, and extension.

25. A communication apparatus, comprising:

a processor and a memory, wherein
the processor is configured to execute a computer program stored in the memory, so that the communication apparatus is enabled to perform the method according to any one of claims 1 to 12.

26. A computer-readable storage medium, wherein the computer-readable storage medium stores a computer program, and when the computer program runs on a computer, the computer is enabled to perform the method according to any one of claims 1 to 12.

27. A chip system, comprising: a processor, configured to invoke and run a computer program in a memory, so that a grant-free resource configuration device on which the chip system is installed is enabled to perform the method according to any one of claims 1 to 12.

[FIG. 1]

[FIG. 2]

1710–1735 · 25 MHz in a 1800 frequency band · 1805–1830 · FDD uplink · FDD downlink · 30 MHz in an F frequency band · 1885–1915 · F frequency band TDD · 15 MHz in an A frequency band · 2010–2025 · A frequency band TDD

27

[FIG. 3]

| Determine a first wideband based on at least two time division duplex TDD frequency bands, where the first wideband includes the at least two TDD frequency bands and a bandwidth between the at least two TDD frequency bands | S310 |

| Determine N pilot blocks based on the first wideband, where N is a positive integer | S320 |

| Perform numbering for the first wideband based on P, to obtain a first pilot block, where P is a smallest prime number greater than or equal to N | S330 |

| Send a sounding reference signal SRS on the first pilot block | S340 |

[FIG. 4]

Sounding reference signal SRS

A sparse module is actually generated based on P pilot blocks, where P is a smallest prime number greater than N

A first wideband includes N first pilot blocks

First pilot block

First pilot block

First pilot block

First pilot block

First pilot block

First pilot block

First pilot block

First pilot block

F frequency band TDD

A frequency band TDD

Rule 26,
16.11.2023

[FIG. 5]

Network
device

Joint cross-
frequency band
channel estimation
with the sparse SRS

F frequency band/A
frequency band
precoding vector
calculation

Joint sparse
SRS in an F
frequency band

Joint sparse
SRS in an A
frequency band

Downlink data
transmission in the
F frequency band

Downlink data
transmission in the
A frequency band

Terminal
device

[FIG. 6]

Obtain a frequency division duplex FDD downlink channel and a time division duplex TDD channel ⟩ S610

Determine a first channel $H^f_{COM_{UE}}$ based on the FDD downlink channel and the TDD channel ⟩ S620

Perform inverse discrete Fourier transform IDFT on the first channel $H^f_{COM_{UE}}$ to obtain a second channel $H^\tau_{COM_{UE}}$ ⟩ S630

Send first information based on the second channel $H^\tau_{COM_{UE}}$ ⟩ S640

[FIG. 7]

[FIG. 8]

$$H^f_{COM_{UE}} \in \mathcal{C}^{W_{com}} \qquad A_{DFT} \in \mathcal{C}^{W_{com}*W_{com}} \qquad H^\tau_{COM_{UE}} \in \mathcal{C}^{W_{com}}$$

$f_{start}$

FDD uplink

FDD downlink

$= H^f_{DL}$

F frequency band TDD

$f_{end}$

$H^f_{TDD}$

[FIG. 9]

| |
|---|
| Obtain a frequency division duplex FDD uplink channel and a time division duplex TDD channel |

S910

| |
|---|
| Determine a third channel $H^f_{COM_{BS}}$ based on the FDD uplink channel and the TDD channel |

S920

| |
|---|
| Determine an FDD downlink channel based on the third channel $H^f_{COM_{BS}}$ and first information |

S930

[FIG. 10]

[FIG. 11]

Network device

Obtain a full frequency-domain channel based on the first information, to obtain an FDD downlink channel

F frequency band CSI-RS

FDD downlink CSI-RS

Start point and end point of a cross-frequency band bandwidth

Send first information by using a PMI

F frequency band SRS

FDD uplink SRS

Terminal device

Joint cross-frequency band estimation with the CSI-RS

EP 4 604 460 A1

[FIG. 12]

Channel information obtaining apparatus 1200

Processor 1210

Memory 1220

Transceiver 1230

[FIG. 13]

Channel information obtaining apparatus 1300

Processing unit 1310

Transceiver unit 1320

## INTERNATIONAL SEARCH REPORT

| International application No. |
| --- |
| **PCT/CN2023/125611** |

**A. CLASSIFICATION OF SUBJECT MATTER**

H04L25/02(2006.01)i; H04B17/309(2015.01)i

According to International Patent Classification (IPC) or to both national classification and IPC

**B. FIELDS SEARCHED**

Minimum documentation searched (classification system followed by classification symbols)

IPC: H04L,H04W,H04B

Documentation searched other than minimum documentation to the extent that such documents are included in the fields searched

Electronic data base consulted during the international search (name of data base and, where practicable, search terms used)

CNABS, CNTXT, CNKI, VEN, DWPI, ENTXT, 3GPP, IEEE: 频分双工, 时分双工, 信道, 上行, 下行, 离散, 傅里叶, 逆变换, 组合, 结合, FDD, TDD, channel, uplink, downlink, IDFT, combine

**C. DOCUMENTS CONSIDERED TO BE RELEVANT**

| Category* | Citation of document, with indication, where appropriate, of the relevant passages | Relevant to claim No. |
| --- | --- | --- |
| A | US 2015109932 A1 (GOLDHAMER, Mariana) 23 April 2015 (2015-04-23) description, paragraphs 0010-0212 | 1-27 |
| A | US 2006077931 A1 (SAMSUNG ELECTRONICS CO., LTD.) 13 April 2006 (2006-04-13) entire document | 1-27 |
| A | CN 101662322 A (SAMSUNG ELECTRONICS CO., LTD. et al.) 03 March 2010 (2010-03-03) entire document | 1-27 |
| A | CN 105337692 A (CHINA ACADEMY OF TELECOMMUNICATIONS TECHNOLOGY) 17 February 2016 (2016-02-17) entire document | 1-27 |
| A | CN 114600384 A (HUAWEI TECHNOLOGIES CO., LTD.) 07 June 2022 (2022-06-07) entire document | 1-27 |

☑ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **28 November 2023** | **01 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/125611** |

**C.   DOCUMENTS CONSIDERED TO BE RELEVANT**

| Category* | Citation of document, with indication, where appropriate, of the relevant passages | Relevant to claim No. |
| --- | --- | --- |
| A | ZHONG, Zhimeng et al. "FDD Massive MIMO Uplink and Downlink Channel Reciprocity Properties: Full or Partial Reciprocity?" *GLOBECOM 2020 - 2020 IEEE Global Communications Conference,* 25 January 2021 (2021-01-25), entire document | 1-27 |

Form PCT/ISA/210 (second sheet) (July 2022)

**INTERNATIONAL SEARCH REPORT**
Information on patent family members

International application No.

**PCT/CN2023/125611**

| Patent document cited in search report | | | Publication date (day/month/year) | Patent family member(s) | | | Publication date (day/month/year) |
|---|---|---|---|---|---|---|---|
| US | 2015109932 | A1 | 23 April 2015 | US | 2016381601 | A1 | 29 December 2016 |
| | | | | WO | 2014061001 | A1 | 24 April 2014 |
| | | | | GB | 2522377 | A | 22 July 2015 |
| | | | | IL | 222597 | A1 | 30 April 2014 |
| | | | | GB | 2568835 | A | 29 May 2019 |
| US | 2006077931 | A1 | 13 April 2006 | KR | 20060031927 | A | 14 April 2006 |
| | | | | EP | 1646256 | A1 | 12 April 2006 |
| | | | | DE | 602005023108 | D1 | 07 October 2010 |
| CN | 101662322 | A | 03 March 2010 | KR | 20110044876 | A | 02 May 2011 |
| | | | | EP | 2319198 | A2 | 11 May 2011 |
| | | | | US | 2011150117 | A1 | 23 June 2011 |
| | | | | WO | 2010024556 | A2 | 04 March 2010 |
| CN | 105337692 | A | 17 February 2016 | WO | 2016023410 | A1 | 18 February 2016 |
| CN | 114600384 | A | 07 June 2022 | WO | 2021081847 | A1 | 06 May 2021 |

Form PCT/ISA/210 (patent family annex) (July 2022)

**EP 4 604 460 A1**

**Patent documents cited in the description**

- CN 202211307947